# FASCICULE DE BREVET EUROPEEN

(11) **EP 4 055 361 B1**
(45) Date de publication et mention de la délivrance du brevet: **04.06.2025**
(21) Numéro de dépôt: 20816279.2
(22) Date de dépôt: 06.11.2020
(51) Int. Cl.: G01N 1/28, B01L 3/00, B01L 9/00

(54) **DISPOSITIFS DE CYTOCENTRIFUGATION**
CYTOCENTRIFUGATION-GERÄTE
CYTOCENTRIFUGATION DEVICES

(30) Priorité: 06.11.2019 FR 1912469
(43) Date de publication de la demande: 14.09.2022
(73) Titulaire: iLsa Diagnostics, 95310 Saint-Ouen-l'Aumone (FR)
(72) Inventeur: WALLART, Guillaume, 25680 MESANDANS (FR)
(74) Mandataire: IP Trust
(86) Numéro de dépôt international: PCT/FR2020/052016
(87) Numéro de publication internationale: WO 2021/089956

(56) Documents cités:
- EP-A1- 1 374 996
- US-A- 4 874 582
- US-B2- 7 758 816

## Description

### Domaine de l'invention

La présente invention concerne les dispositifs de cytocentrifugation utilisés pour déposer par centrifugation des sédiments, tels que des cellules, à partir d'un échantillon contenant du sédiment sur une lame de microscope, et en particulier dans le domaine des chambres d'échantillonnage destinées à recevoir les échantillons pour transférer l'échantillon sur une lame de microscope.

Ces dispositifs sont notamment destinés à l'analyse de cellules, liquide céphalo-rachidien, salive, urine, liquides gastriques.

Les dispositifs de cytocentrifugation sont conçus pour centrifuger de petits échantillons de fluides, tels que de prélèvements en milieu liquide, par exemple du sang, afin de séparer les cellules ou autres matériaux sédimentaires et de déposer les cellules ou autres matériaux sédimentaires sur une lame de microscope pour un examen et une évaluation approfondie. Les dispositifs de cytocentrifugation comprennent généralement un rotor auquel plusieurs chambres de réception d'échantillons, parfois appelées « entonnoirs cytologique », en association avec des lames de microscope fixées de manière amovible. L'échantillon de fluide contenant le matériau de sédiment à examiner est placé dans un puits de réception d'échantillon dans la chambre d'échantillonnage.

Pendant la centrifugation, l'échantillon s'écoule par la force centrifuge contre la lame de microscope, de sorte que les cellules ou autres matériaux de sédiments contenus dans l'échantillon sont poussés contre la lame de microscope et y adhèrent généralement. Pendant la centrifugation, l'échantillon est maintenu dans une chambre de sédimentation contre la lame de microscope qui forme une extrémité de la chambre de sédimentation. La chambre de sédimentation peut servir de puits de réception d'échantillon ou le puits de réception d'échantillon peut être séparé de la chambre de sédimentation et disposé de sorte que l'échantillon s'écoule du puits de réception d'échantillon dans la chambre de sédimentation au début de la centrifugation. Après la centrifugation, la chambre de réception des échantillons est retirée du dispositif de cytocentrifugation et la lame de microscope est également retirée du dispositif de cytocentrifugation pour examen et évaluation. En fonction du dispositif de cytocentrifugation, la chambre d'échantillon et la lame de microscope peuvent être retirées du dispositif de cytocentrifugation en tant qu'unité, la lame de microscope étant ensuite séparée de la chambre d'échantillon pour examen et évaluation, ou les deux peuvent être retirées séparément du dispositif de cytocentrifugation.

Cependant, dans les deux cas, il est souhaitable que la partie liquide de l'échantillon soit retirée du contact avec la lame de microscope à la fin de la centrifugation afin que le liquide n'interfère pas avec le sédiment déposé sur la lame et que la lame et l'échantillon La chambre peut être retirée du dispositif de cytocentrifugation ou séparée d'une autre manière sans les dégâts et les risques de contamination pouvant résulter de l'écoulement incontrôlable du liquide hors de la chambre de sédimentation.

Les chambres à échantillon sont généralement constituées par une pièce en matière plastique à usage unique, présentant un premier volume creux pour recevoir l'échantillon et un deuxième volume creux qui peut être fermé par la lame de microscope, ainsi qu'un passage de fluide entre ces deux volumes pour permettre le transfert lorsque la chambre est appliquée contre une lame de microscope et placé dans un support ad hoc d'une centrifugeuse. La force centrifuge assure le transfert des sédiments sur la lame de microscope.

### État de la technique

On connaît dans l'état de la technique de nombreuses solutions les entonnoirs pour cytologie utilisés pour déposer une mince couche de cellules sur une aire clairement définie d'une lame de microscope.

On connaît le brevet américain US4874582 décrivant une unité de traitement d'échantillons pour un appareil de centrifugation, en particulier pour une cytocentrifugation afin de produire des monocouches de cellules, est décrite. L'unité de traitement d'échantillon est adaptée pour un traitement de protection automatisé, par ex. fixation, de la matière déposée sur une lame lors de la centrifugation. À cette fin, l'unité a un corps définissant une chambre de dépôt et un réservoir de fluide de traitement communiquant avec la chambre de dépose via une chambre tampon et une voie d'écoulement comprenant un déversoir agencé de manière que, dans la position de centrifugation, un fluide de traitement tel que fixateur le réservoir y est retenu jusqu'à ce que la centrifugation produise un champ gravitationnel artificiel qui force le fluide à s'écouler dans la chambre tampon dans laquelle il est ensuite retenu par le déversoir aussi longtemps que le champ gravitationnel artificiel est maintenu. Lorsque ce champ se désintègre, le fluide s'écoule par-dessus le déversoir en direction de la chambre de dépôt. Il peut y avoir une série de tels réservoirs et de chambres tampons et de déversoirs associés dans des trajets d'écoulement respectifs ou dans un trajet d'écoulement prolongé à travers lequel le ou les trajets d'écoulement sont amenés à progresser en succession en appliquant de manière répétée le champ de gravitation artificiel.

Le brevet américain US7758816B2 décrit un autre exemple de chambre à échantillons de cytocentrifugeuse qui comprend un puits de réception de l'échantillon pour recevoir et garder un échantillon à centrifuger et une chambre de sédimentation adjacente à une lame de microscope sur laquelle les cellules et/ou un autre matériau de sédiment dans l'échantillon doit être déposés. Un passage, tel qu'un déversoir, relie le puits de réception de l'échantillon et la chambre de sédimentation, de manière à ce que l'échantillon circule à partir du puits à échantillon sous l'influence d'une force centrifuge lorsque la centrifugation commence dans la chambre de sédimentation où l'échantillon est forcé par la force centrifuge contre la lame de microscope en laissant un espace vacant du côté de l'extrémité interne de la chambre de sédimentation. La sédimentation de l'échantillon a lieu contre la lame de microscope. Lorsque la centrifugation se termine, les composants liquides de l'échantillon retournent dans l'espace vacant de la chambre de sédimentation et ils peuvent être récupérés à partir de l'espace vacant du côté de l'extrémité de la chambre de sédimentation à travers une chambre de récupération
La demande de brevet européen EP1374996 concerne des dispositifs et des procédés de test comprenant une base dimensionnée pour contenir un substrat ayant au moins un réseau, un couvercle dimensionné pour recouvrir le substrat et un emboîtement.

### Présentation résumée de l'invention

La présente invention concerne selon son acception la plus générale une chambre de transfert d'échantillon biologique sur une lame d'analyse présentant la combinaison de caractéristiques énoncées par la revendication 1.

Avantageusement, ladite chambre est constituée par deux corps complémentaires emboitables.

Selon une variante, le fond de ladite cuvette est prolongé par une entretoise dont la surface frontale est coplanaire avec la surface frontale de ladite couronne intérieure.

Ladite entretoise est avantageusement formée par une couronne creuse pour produire un effet ventouse lors de l'application contre une lame de verre.

Selon une autre variante, la section de ladite couronne extérieure dudit deuxième corps est supérieure à la section de ladite lumière de sortie dudit puit.

De préférence, ladite paroi extérieure dudit premier corps présente un évent débouchant dans ledit canal.

Avantageusement, les corps sont constitués en un copolymère styrénique.

### Description détaillée d'un exemple non limitatif de l'invention

La présente invention sera mieux comprise à la lecture de la description détaillée d'un exemple non limitatif de réalisation illustré par les dessins annexés où :

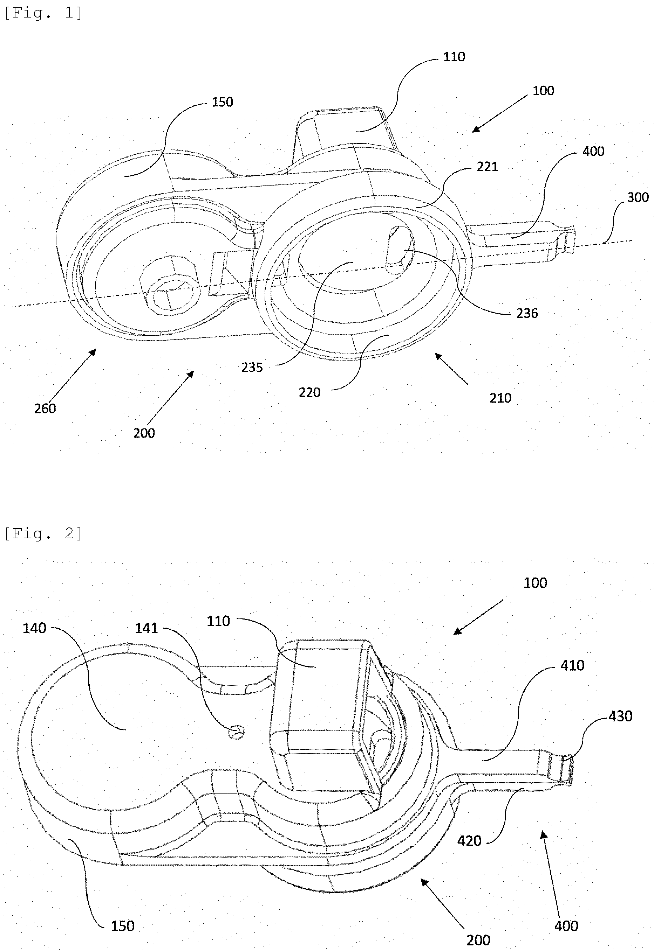

[Fig. 1] La figure 1 représente une vue en perspective de trois-quarts dessous d'un exemple de chambre de transfert selon l'invention
[Fig. 2] La figure 2 représente une vue en perspective de trois-quarts dessus dudit exemple de chambre de transfert selon l'invention

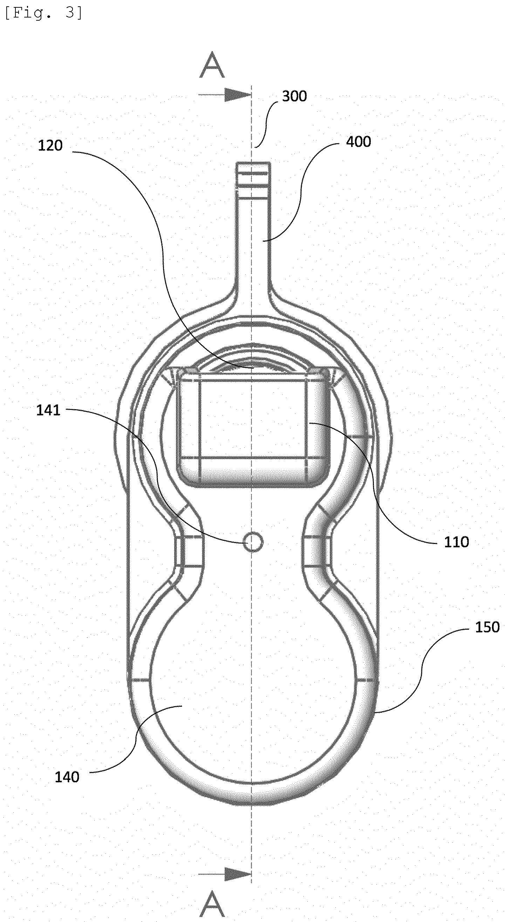

[Fig. 3] La figure 3 représente une vue de dessus dudit exemple de chambre de transfert selon l'invention

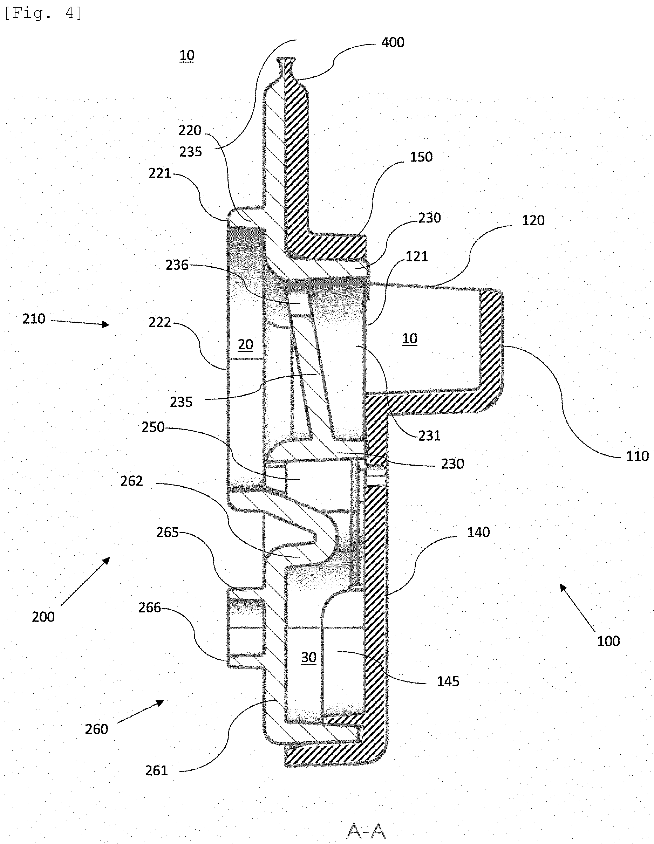

[Fig. 4] La figure 4 représente une vue en coupe dudit exemple de chambre de transfert selon l'invention

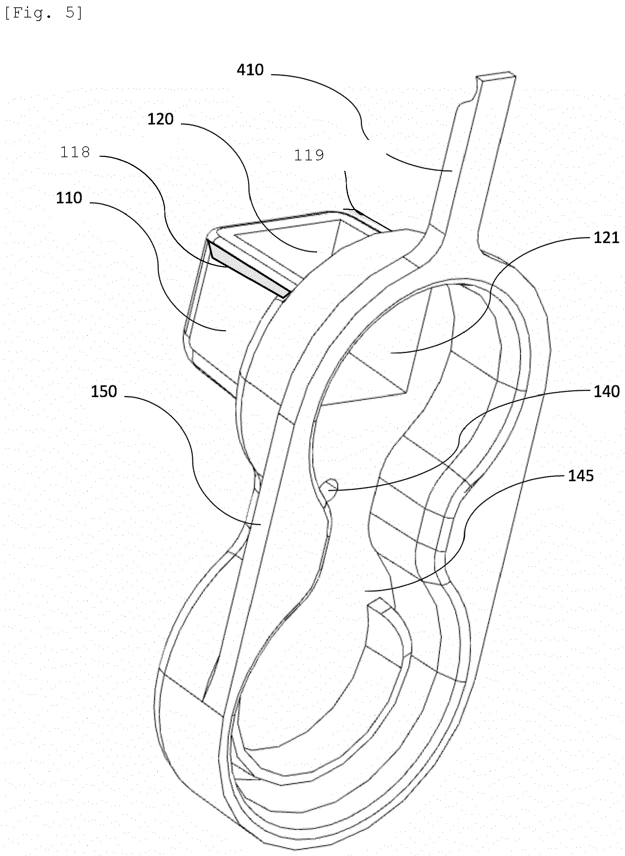

[Fig. 5] La figure 5 représente une vue en perspective de trois-quarts dessous du corps extérieur d'un exemple de chambre de transfert selon l'invention

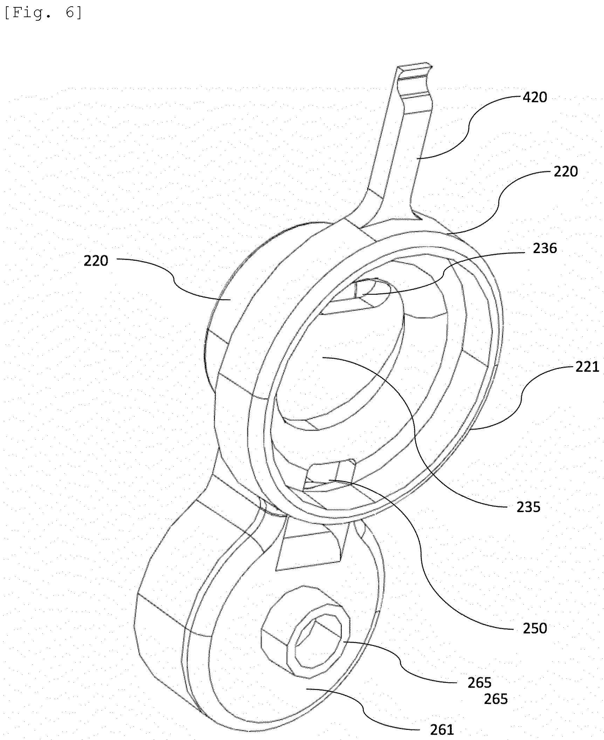

[Fig. 6] La figure 6 représente une vue en perspective de trois-quarts dessous du corps intérieur d'un exemple de chambre de transfert selon l'invention

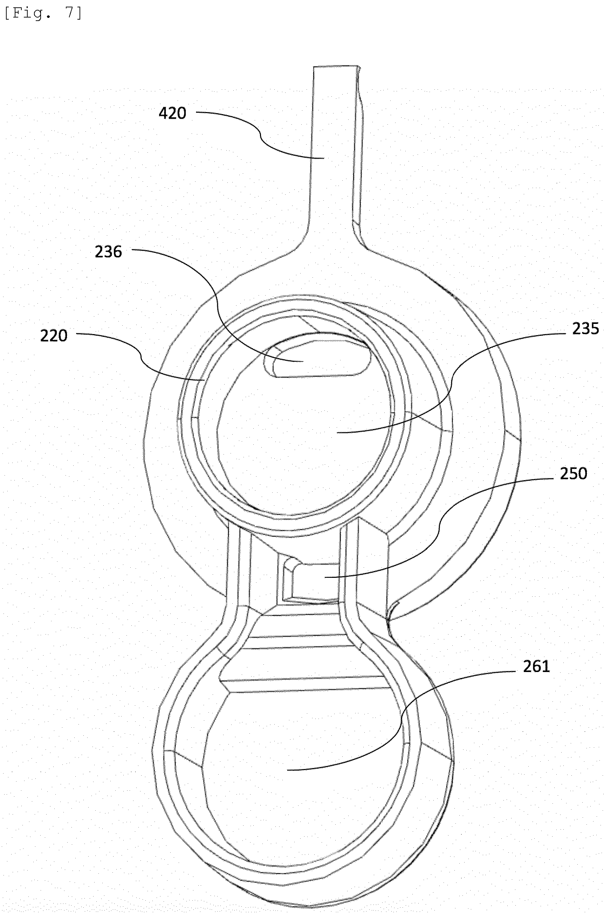

[Fig. 7] La figure 7 représente une vue en perspective de trois-quarts dessus du corps intérieur d'un exemple de chambre de transfert selon l'invention
[Fig. 8] La figure 8 représente une vue en perspective de trois-quarts dessus du corps intérieur d'une variante de chambre de transfert selon l'invention.
[Fig. 9] La figure 9 représente une vue en coupe d'une variante de chambre de transfert selon l'invention.

Par convention, on désignera par « intérieur » le côté de la chambre qui se trouve du côté de la lame de microscope, et par « extérieur » le côté opposé de la chambre.

En effet, la chambre est destinée à être plaquée contre une lame de verre, généralement par l'intermédiaire d'un support, pour être placé dans une centrifugeuse, la lame de verre étant positionnée du côté opposé au centre de la centrifugeuse.

De même, par convention on désignera par « supérieur » le côté de la chambre dans laquelle on introduit l'échantillon à transférer par centrifugation sur la lame de verre, et par « inférieur » le côté opposé.

### Description générale de la chambre selon l'exemple illustré

La chambre de transfert selon l'invention est constituée par deux corps (100, 200) complémentaires qui permettent de réaliser un ensemble fluidique lorsqu'ils sont assemblés par emboitage. Ces deux corps (100, 200) sont constitués par deux pièces séparées ou par une pièce unique, les deux corps (100, 200) étant réunis par des bras de liaison (410, 420) formant une charnière (400).

Ces corps (100, 200) sont réalisés par moulage d'une matière plastique, préférentiellement un élastomère thermoplastique tel que du styrène-butadiène-styrène (SBS), des copolymères styrène-éthylène/butylène-styrène et styrène-éthylène/propylène, et notamment du polystyrène-b-poly(éthylène-butylène)-b-polystyrène (SEBS) commercialisé sous le nom commercial de KRATON G.

### Description détaillée du corps extérieur (100)

La chambre est fonctionnellement constituée par une pièce creuse (100, 200) présentant un première volume creux (10) défini par un puit (110) s'ouvrant par une lumière d'alimentation (120) et débouchant dans un deuxième volume creux (20) par l'intermédiaire d'une lumière (236) prévue à la partie supérieure d'une paroi de séparation (235) inclinée par rapport à la verticale lorsque ladite chambre de transfert est positionnée dans une centrifugeuse, ledit deuxième volume creux (20) communiquant par l'intermédiaire d'un canal (250) avec un troisième volume creux (30) disposé sous ledit deuxième volume creux (20) lorsque ladite chambre de transfert est positionnée dans une centrifugeuse.

Le puit (110) peut présenter à sa surface extérieure deux bossages (118, 119), permettant au déverrouillage du carrousel, d'écarter la chambre de la lame, et favorisant ainsi le déchargement de la lame du carrousel indépendamment de celui de la lame. L'autre bénéfice, est de laisser un interstice suffisant entre les deux, de sorte de favoriser le séchage de la lame.

Le corps extérieur (100) est constitué par une pièce moulée présentant la forme d'une coque creuse ouverte du côté intérieur, et fermée du côté opposé, et entouré par une jupe périphérique (150) délimitant un volume creux (145).

La partie supérieure de cette coque présente une protubérance constituant un puit d'alimentation (110), de forme cubique.

Ce puit d'alimentation (110) s'ouvre à sa partie supérieure par une lumière d'alimentation (120) carrée, dans un plan perpendiculaire à l'axe longitudinal (300) de la chambre.

Il définit un volume creux (10) pour recevoir l'échantillon à centrifugé, et présente par une lumière de sortie (121) perpendiculaire au plan de ladite lumière d'alimentation (120), sur le côté intérieur de ce puit cubique (110).

Cette lumière de sortie (121) débouche dans le volume creux (20) délimité par ladite jupe périphérique (150) et le corps complémentaire (200).

L'un des côtés, dans l'exemple décrit le côté supérieur, est prolongé par un bras (410) dont l'extrémité est articulée par rapport au bras (420) prolongeant le corps intérieur (200) pour former une charnière (400) permettant d'ouvrir et fermer la chambre de transfert.

La paroi extérieure (140) de la coque présente optionnellement un évent (140) débouchant dans le volume creux (145). Cet évent (140) permet d'amélioration l'évacuation du liquide circulant dans le canal (250)

### Description détaillée du corps intérieur (200)

Le corps intérieur (200) présente une partie supérieure (210) et une partie inférieure (220).

La partie supérieure (210) du corps intérieur (200) définit une zone de transfert entre l'échantillon introduit dans le puit (110) et la lame de verre lorsque la chambre est associée à une lame de microscopie dans une centrifugeuse.

Elle présente une première couronne (220) intérieure dont le bord frontal (221) forme une surface de contact étanche avec une lame de microscope appliquée contre elle. Cette surface de contact définit une lumière de transfert (222) parallèle au plan longitudinal de ladite chambre.

Elle communique avec le volume creux définit par une deuxième couronne (230) extérieure, par l'intermédiaire d'un orifice (236) prévu dans la partie supérieure d'une cloison de séparation (235). Cette cloison (235) inclinée par rapport au plan longitudinal selon un angle d'environ 10° à 30°, pour créer un gradient lors de la centrifugation.

La couronne (230) extérieure définit une lumière d'entrée (231) communiquant avec la lumière de sortie (121) du puit (110) lorsque les deux corps (100, 200) sont assemblés.

La section de la couronne (230) extérieure étant inférieure à la section de ladite première couronne (220) pour définir un canal (250) de transfert vers une partie inférieure (260) du corps (200). Ce canal est orienté transversalement, c'est-à-dire perpendiculairement au plan longitudinal parallèle à la lame de microscope lorsque la chambre est accolée contre une lame.

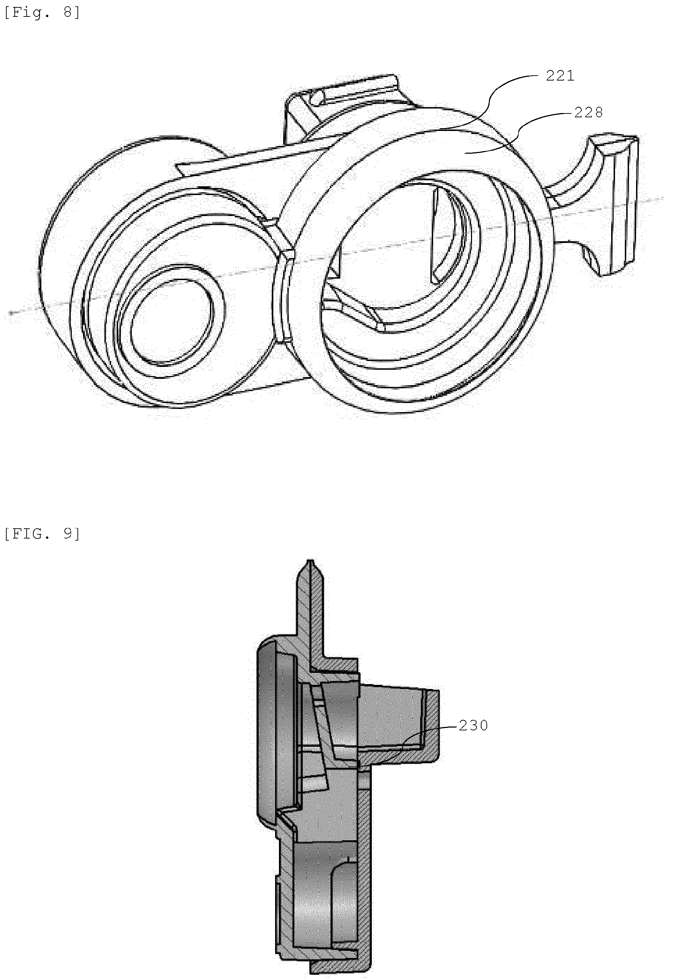

La deuxième couronne (230) peut toutefois être limitée comme représentée en figure 9 afin de favoriser un bon écoulement gravitaire dans le réservoir (145).

La partie intérieure (220) du corps inférieur (200) présentant une cuvette (261) débouchant dans ledit volume creux arrière (145).

Elle est prolongée par une entretoise (265) dont la surface frontale (266) est coplanaire avec la surface frontale (221) de ladite couronne intérieure (220). Cette entretoise (265) assure un positionnement stable de la chambre de transfert sur la lame de microscope lors de la centrifugation.

### Exemple d'utilisation

La chambre de transfert selon la présente invention peut par exemple être utilisée pour préparer une lame d'analyse cytologique d'un frottis, par exemple cervico vaginal ou à partir d'une ponction kyste ou de la thyroïde.

L'échantillon est préparé à partie d'un frottis effectué par un laboratoire introduit dans un pot à fond conique contenant un liquide de conservation pour éviter lyse des cellules, et assurer la conservation de l'ADN)

On procède à une première centrifugation de l'échantillon dans son pot à fond conique, à faible vitesse, par exemple 20 à 100 G, pour provoquer la concentration des cellules d'intérêts dans le culot.

On procède ensuite au transfert dans le première volume creux (10) d'une quantité calibrée de 250 microlitres du culot en le versant dans le puit (110) d'une chambre selon l'invention, appliquée contre une lame de verre dans le support d'une centrifugeuse.

On procède alors à une première centrifugation lente pour transférer les cellules dans le deuxième volume creux (20) et les déposer sur la lame par la force centrifuge, par le passage par la lumière (236) de la cloison (235), présentant une légère inclinaison par rapport à la composante verticale.

On arrête ensuite la centrifugation, et le résidu de liquide s'écoule par gravité dans le troisième volume creux (30) défini par la cuvette (261) et la paroi (140).

Ce troisième volume creux (30) est placé sous la chambre accolée contre la lame de réception de l'échantillon. Elle a pour fonction de recueillir le résidu de liquide qui s'écoule par gravité depuis le volume creux accolé contre la lame. Une deuxième centrifugation permet de fixer les cellules sur la lame et réaliser le séchage de la lame. Le liquide évacué dans le volume (30) est ensuite piégé par la paroi (262) lors d'une dernière centrifugation. Cette couronne (262) est toutefois optionnelle et peut être omise afin de favoriser un bon écoulement gravitaire dans le réservoir 145.

On procède ensuite à une deuxième centrifugation pour fixer les cellules sur la lame et réaliser le séchage de la lame. Le liquide évacué dans le volume (30) est ensuite piégé par la paroi (262) lors d'une dernière centrifugation.

On procède ensuite au retrait de la lame de verre, la chambre restant collée par un effet « effet ventouse ».

### Variante illustrée par la figure 8

Afin d'améliorer l'étanchéité entre le dispositif et la lame, le bord frontal (221) de la première couronne (220) intérieure est prolongée par une lèvre périphérique formant une jupe tronconique (228) qui forme une surface de contact étanche avec une lame de microscope appliquée contre elle. Cette jupe tronconique (228) assurer une bonne étanchéité entre la chambre et la lame. Cette étanchéité se renforce en plaquant d'avantage cette lèvre sur la lame sous l'action de la force centrifuge.

Lors de la libération de la chambre sur la lame, et ce de par l'effet élastique de cette lèvre et de par les tensions de surface, le résiduel de corolle de l'échantillon de liquide vient se piéger dans cet angle, afin de bien délimiter un spot humide et non baveux et coulant.

## Revendications

1. - Chambre de transfert d'échantillon biologique sur une lame d'analyse par centrifugation, ladite chambre comprenant
- trois volumes creux (10, 20 et 30)
∘ ledit premier volume creux (10) étant défini par un puit (110) s'ouvrant par une lumière d'alimentation (120) et débouchant ledit deuxième volume creux (20) par l'intermédiaire d'une lumière (236) prévue à la partie supérieure d'une paroi de séparation (235) inclinée par rapport à la verticale lorsque ladite chambre de transfert est positionnée dans une centrifugeuse,
∘ ledit deuxième volume creux (20) communiquant par l'intermédiaire d'un canal (250) avec ledit troisième volume creux (30) disposé sous ledit deuxième volume creux (20) lorsque ladite chambre de transfert est positionnée dans une centrifugeuse.
- Et **caractérisée en ce qu'**elle comprend deux corps (100, 200) constitués par deux pièces séparées ou par une pièce unique, les deux corps (100, 200) étant réunis par des bras de liaison (410, 420) formant une charnière (400)
∘ ledit corps extérieur (100) présentant une jupe périphérique (150) délimitant un volume creux (145), un puit d'alimentation (110) s'ouvrant à sa partie supérieure par une lumière d'alimentation (120) perpendiculaire à l'axe longitudinal (300) de ladite chambre et débouchant par une lumière de sortie (121) perpendiculaire au plan de ladite lumière d'alimentation (120) débouchant dans ledit volume creux (145) délimité par ladite jupe périphérique (150)
∘ ledit corps intérieur (200) présentant une partie supérieure (210) et une partie inférieure (220)
▪ ladite partie supérieure (210) dudit corps intérieur (200) présentant une première couronne (220) intérieure dont le bord frontal (221) forme la surface de contact avec une lame de microscope,
• ladite surface de contact définissant une lumière de transfert (222) parallèle au plan longitudinal de ladite chambre, et une lumière d'entrée (231),
• lesdites lumières de transfert (222) et d'entrée (231) étant séparée par une cloison (235) inclinée par rapport au plan longitudinal et présentant dans sa partie supérieure une lumière (236), la section de ladite couronne (230) extérieure étant inférieure à la section de ladite première couronne (220) pour définir entre elle un canal (250) de transfert vers une partie inférieure (260),
▪ ladite partie inférieure (220) dudit corps intérieur (200) présentant une cuvette (261) débouchant dans ledit volume creux arrière (145),

2. - Chambre de transfert d'échantillon biologique sur une lame d'analyse selon la revendication 1 **caractérisé en ce que** lesdits deux corps (100, 200) sont complémentaires et emboitables.

3. - Chambre de transfert d'échantillon biologique sur une lame d'analyse selon la revendication 1 **caractérisé en ce que** lesdits deux corps (100, 200) sont complémentaires et reliés par une charnière (400).

4. - Chambre de transfert d'échantillon biologique sur une lame d'analyse selon la revendication 1 **caractérisé en ce que** le fond de ladite cuvette (261) est prolongé par une entretoise (265) dont la surface frontale (266) est coplanaire avec la surface frontale (221) de ladite couronne intérieure (220).

5. - Chambre de transfert d'échantillon biologique sur une lame d'analyse selon la revendication précédente **caractérisé en ce que** ladite chambre (30) est délimitée dans sa partie supérieure par une paroi transversale (262) prévue sur la coque intérieure (200) et préservant une fente de passage par rapport au couvercle (140).

6. - Chambre de transfert d'échantillon biologique sur une lame d'analyse selon la revendication 1 **caractérisé en ce que** la section de ladite couronne extérieure (230) dudit deuxième corps (220) est supérieure à la section de ladite lumière de sortie (121) dudit puit (110).

7. - Chambre de transfert d'échantillon biologique sur une lame d'analyse selon la revendication 1 **caractérisé en ce que** ladite paroi extérieure (140) dudit premier corps (100) présente un évent (141) débouchant dans ledit canal (250).

8. - Chambre de transfert d'échantillon biologique sur une lame d'analyse selon la revendication 1 **caractérisé en ce qu'**elle est constituée en un copolymère styrénique.

## Patentansprüche

1. Kammer zum Übertragen einer biologischen Probe auf einen Objektträger zum Analysieren durch Zentrifugieren, die Kammer umfassend
- drei Hohlvolumina (10, 20 und 30)
∘ wobei das erste Hohlvolumen (10) durch eine Vertiefung (110) definiert ist, die sich durch einen Zufuhrschlitz (120) öffnet und über einen Schlitz (236) in das zweite Hohlvolumen (20) mündet, der in dem oberen Teil einer Trennwand (235) vorgesehen ist, die relativ zu der Vertikalen geneigt ist, wenn die Übertragungskammer in einer Zentrifuge positioniert ist,
∘ wobei das zweite Hohlvolumen (20) über einen Kanal (250) mit dem dritten Hohlvolumen (30) in Verbindung steht, der unter dem zweiten Hohlvolumen (20) angeordnet ist, wenn die Übertragungskammer in einer Zentrifuge positioniert ist.
- und **dadurch gekennzeichnet, dass** sie zwei Körper (100, 200) umfasst, die aus zwei getrennten Stücken oder einem einzigen Stück bestehen, wobei die zwei Körper (100, 200) durch Verbindungsarme (410, 420) zusammengefügt sind, die ein Gelenk (400) ausbilden
∘ wobei der Außenkörper (100) einen Umfangsrand (150) aufweist, der einen Hohlraum (145) begrenzt, wobei sich eine Zufuhrvertiefung (110) durch einen Zufuhrschlitz (120) öffnet, der senkrecht zu der Längsachse (300) der Kammer ist und durch einen Auslassschlitz (121) mündet, der senkrecht zu dem Zufuhrschlitz (120) ist, der in das Hohlvolumen (145) mündet, das durch den Umfangsrand (150) begrenzt ist
o wobei der Innenkörper (200) einen oberen Teil (210) und einen unteren Teil (220) aufweist
▪ wobei der obere Teil (210) des Innenkörpers (200) eine erste Innenkrone (220) aufweist, deren Vorderkante (221) die Kontaktoberfläche mit einem Mikroskopobjektträger ausbildet,
• wobei die Kontaktoberfläche einen Übertragungsschlitz (222) parallel zu der Längsebene der Kammer und einen Einlassschlitz (231) definiert,
• wobei der Übertragungsschlitz (222) und der Einlassschlitz (231) durch eine Wandung (235) getrennt sind, die relativ zu der Längsebene geneigt ist und in ihrem oberen Teil einen Schlitz (236) aufweist, wobei der Querschnitt der Außenkrone (230) kleiner als der Querschnitt der ersten Krone (220) zum Definieren dazwischen eines Kanals (250) zum Übertragen an einen unteren Teil (260) ist,
▪ wobei der untere Teil (220) des Innenkörpers (200) eine Wanne (261) aufweist, die in den hinteren Hohlraum (145) mündet.

2. Kammer zum Übertragen einer biologischen Probe auf einen Analyseobjektträger nach Anspruch 1, **dadurch gekennzeichnet, dass** die zwei Körper (100, 200) komplementär und ineinander schachtelbar sind.

3. Kammer zum Übertragen einer biologischen Probe auf einen Analyseobjektträger nach Anspruch 1, **dadurch gekennzeichnet, dass** die zwei Körper (100, 200) komplementär sind und durch ein Gelenk (400) verbunden sind.

4. Kammer zum Übertragen einer biologischen Probe auf einen Analyseobjektträger nach Anspruch 1, **dadurch gekennzeichnet, dass** der Boden der Wanne (261) durch einen Abstandshalter (265) verlängert ist, dessen vordere Oberfläche (266) in einer Ebene mit der vorderen Oberfläche (221) der Innenkrone (220) liegt.

5. Kammer zum Übertragen einer biologischen Probe auf einen Analyseobjektträger nach dem vorstehenden Anspruch,
**dadurch gekennzeichnet, dass** die Kammer (30) in ihrem oberen Teil durch eine Querwand (262) begrenzt ist, die an der Innenschale (200) vorgesehen ist und eine Durchgangsspalte relativ zu der Abdeckung (140) sicherstellt.

6. Kammer zum Übertragen einer biologischen Probe auf einen Analyseobjektträger nach Anspruch 1, **dadurch gekennzeichnet, dass** der Querschnitt der Außenkrone (230) des zweiten Körpers (220) größer als der Querschnitt des Auslassschlitzes (121) der Vertiefung (110) ist.

7. Kammer zum Übertragen einer biologischen Probe auf einen Analyseobjektträger nach Anspruch 1, **dadurch gekennzeichnet, dass** die Außenwand (140) des ersten Körpers (100) ein Luftloch (141) aufweist, das in den Kanal (250) mündet.

8. Kammer zum Übertragen einer biologischen Probe auf einen Analyseobjektträger nach Anspruch 1, **dadurch gekennzeichnet, dass** sie aus einem Styrolcopolymer besteht.

## Claims

1. Chamber for transferring a biological sample onto an analysis slide by centrifugation, said chamber comprising
- three hollow volumes (10, 20 and 30)
∘ said first hollow volume (10) being defined by a well (110) opening by means of a supply port (120) and opening into said second hollow volume (20) via a port (236) provided at the upper portion of a partition wall (235) which is inclined with respect to the vertical when said transfer chamber is positioned in a centrifuge,
∘ said second hollow volume (20) communicating via a channel (250) with said third hollow volume (30) which is arranged below said second hollow volume (20) when said transfer chamber is positioned in a centrifuge.
- And **characterized in that** it comprises two bodies (100, 200) consisting of two separate parts or a single part, the two bodies (100, 200) being joined by connecting arms (410, 420) forming a hinge (400)
∘ said outer body (100) having a peripheral skirt (150) delimiting a hollow volume (145), a supply well (110) opening at the upper portion thereof by means of a supply port (120) perpendicular to the longitudinal axis (300) of said chamber and opening by means of an outlet port (121) perpendicular to the plane of said supply port (120) opening into said hollow volume (145) which is delimited by said peripheral skirt (150)
∘ said inner body (200) having an upper portion (210) and a lower portion (220)
■ said upper portion (210) of said inner body (200) having a first inner ring (220) the front edge (221) of which forms the contact surface with a microscope slide,
• said contact surface defining a transfer port (222) parallel to the longitudinal plane of said chamber, and an inlet port (231),
• said transfer (222) and inlet (231) ports being separated by a partition (235) which is inclined with respect to the longitudinal plane and has a port (236) in the upper portion thereof, the cross-section of said outer ring (230) being smaller than the cross-section of said first ring (220) so as to define between them a transfer channel (250) for transferring to a lower portion (260),
■ said lower portion (220) of said inner body (200) having a vessel (261) opening into said rear hollow volume (145),

2. Chamber for transferring a biological sample onto an analysis slide according to claim 1, **characterized in that** said two bodies (100, 200) are complementary and interlockable.

3. Chamber for transferring a biological sample onto an analysis slide according to claim 1, **characterized in that** said two bodies (100, 200) are complementary and connected by a hinge (400).

4. Chamber for transferring a biological sample onto an analysis slide according to claim 1, **characterized in that** the bottom of said vessel (261)
is extended by a spacer (265), the front surface (266) of which is coplanar with the front surface (221) of said inner ring (220).

5. Chamber for transferring a biological sample onto an analysis slide according to the preceding claim, **characterized in that** said chamber (30)
is delimited in its upper portion by a transverse wall (262) provided on the inner shell (200) and protecting a slot for passage with respect to the lid (140).

6. Chamber for transferring a biological sample onto an analysis slide according to claim 1, **characterized in that** the cross-section of said outer ring (230) of said second body (220) is greater than the cross-section of said outlet port (121) of said well (110).

7. Chamber for transferring a biological sample onto an analysis slide according to claim 1, **characterized in that** said outer wall (140) of said first body (100) has a vent (141) opening into said channel (250).

8. Chamber for transferring a biological sample onto an analysis slide according to claim 1, **characterized in that** it is made of a styrene copolymer.
